# EUROPÄISCHE PATENTANMELDUNG

(11) **EP 2 524 780 A1**
(43) Veröffentlichungstag der Anmeldung: **21.11.2012**
(21) Anmeldenummer: 11166268.0
(22) Anmeldetag: 16.05.2011
(51) Int. Cl.: B27K 5/04, B05B 15/12, B07B 9/02, B07B 15/00, B27L 11/00, F26B 17/00, B05B 13/02, E04B 1/76

(54) **Spanaufbereitungsanlage und Verfahren zu deren Anwendung**

(71) Anmelder: Glesser, Erika, 4438 Langenbruck (CH)
(72) Erfinder: Glesser, Erika, 4438 Langenbruck (CH)
(74) Vertreter: Vossius & Partner

(57) **Zusammenfassung**

Eine Spanaufbereitungsanlage (1) zum Aufbereiten von Holzspangut zu Wärmeisolationsspänen umfasst eine Besprühungseinrichtung (10) zum Besprühen des Holzspanguts mit einer Flüssigkeit, eine Trocknungseinrichtung (810) zum Trocknen des besprühten Holzspanguts, wobei die Trocknungseinrichtung (810) Warmluftbeaufschlagmittel zum Beaufschlagen des besprühten Holzspanguts mit erwärmter Luft aufweist und eine Siebeinrichtung (82) zum Abtrennen der Wärmeisolationsspäne aus dem besprühen Holzspangut. Dabei sind die Trocknungseinrichtung (810) und die Siebeinrichtung (82) als eine Trocknungssiebeinheit (80) ausgestaltet, wobei ein Sieb (820) der Siebeinrichtung (82) und die Warmluftbeaufschlagmittel der Trocknungseinrichtung (810) so angeordnet sind, dass das Sieb (820) entgegen seiner Siebdurchgangsrichtung von der erwärmten Luft durchströmbar ist. Die erfindungsgemäße Ausgestaltung der Spanaufbereitungsanlage mit der Trocknungssiebeinheit ermöglicht unter anderem, dass die Wärmeisolationsspäne verhältnismäßig effizient, schnell und effektiv vom Holzspangut abgetrennt und getrocknet werden können.

## Beschreibung

### Technisches Gebiet

Die Erfindung betrifft eine Spanaufbereitungsanlage gemäß dem Oberbegriff des unabhängigen Patentanspruchs 1 sowie ein Verfahren zu deren Anwendung. Solche Spanaufbereitungsanlagen mit einer Besprühungseinrichtung zum Besprühen von Holzspangut mit einer Flüssigkeit, einer Trocknungseinrichtung zum Trocknen des besprühten Holzspanguts, wobei die Trocknungseinrichtung Warmluftbeaufschlagmittel zum Beaufschlagen des besprühten Holzspanguts mit erwärmter Luft aufweist, und einer Siebeinrichtung zum Abtrennen von Wärmeisolationsspäne aus dem besprühten Holzspangut können zum Aufbereiten von Holzspangut zu Wärmeisolationsspänen eingesetzt werden.

### Stand der Technik

Zur Wärme- und/oder Schalldämmung in verschiedenen Bereichen wie beispielsweise bei der Isolation von Häusern werden heute Holzspäne in unterschiedlichen Formen verwendet. Dabei werden typischerweise Holzspäne in einer für den vorgesehenen Zweck geeigneten Form in Hohlräume von Bauteilen eingebracht. Das Isolieren mit Holzspänen kann sehr formflexibel unter Verhinderung von Kältebrücken auf Grund der Form der Bauteile ausführbar sein, wobei die Holzspäne insbesondere als giftklassefreier reiner Naturstoff ein risikoarmes Einbauen und Betreiben der Isolation ermöglichen. Das Verwenden von Holzspänen kann auch aus ökologischer und ökonomischer Sicht zweckmäßig sein, da es eine hochwertige Verwertung von Nebenprodukten ermöglicht.

Holzspäne fallen beispielsweise in Form von Hobel- und/oder Sägespänen sowie -staub als Rohholzspangut bei der Holzbearbeitung an. Um zur Isolation geeignete Holzspäne zu erzeugen, wird das Rohholzspangut typischerweise aufbereitet. Insbesondere ist es häufig erforderlich, dass die Holzspäne nur schwer entflammbar sind, wozu sie in geeigneter Weise behandelt werden müssen. Zudem besteht häufig ein Interesse daran Holzspäne in bestimmten Abmessungen zu verwenden, um eine möglichst effiziente Wärme- und/oder Schalldämmung erreichen zu können. Beispielsweise kann eine Holzspanisolation mit Holzspänen in einer bestimmten Form eine verhältnismäßig tiefe Wärmeleitfähigkeit aufweisen, so dass sie zur Wärmedämmung geeignet ist. Gleichzeitig kann diese Holzspanisolation auch eine verhältnismäßig hohe Wärmespeicherkapazität aufweisen, wodurch beispielsweise der Durchgang von eingestrahlter Sonnenwärme durch ein Bauteil verzögert beziehungsweise gespeichert und ausgeglichen werden kann.

Zum Aufbereiten des Rohholzspanguts zu für die Wärme- und/oder Schalldämmung geeigneten Holzspänen werden heute verschiedene Verfahren und Anlagen eingesetzt. Beispielsweise ist in der WO 01/53621 A1 eine in einem Container angeordnete Kompaktanlage beschrieben, die der Verarbeitung von in einem Holzbearbeitungsbetrieb anfallenden Holzspäne und deren Abfüllung in Transportbehälter dient. Die Kompaktanlage umfasst ein an einen Einlass anschließendes Zwischenelement, in dem die Holzspäne mit einer Salzlösung besprüht werden, durch welche Flammfestigkeit der Holzspäne erreicht wird. Zudem umfasst die Kompaktanlage einen Fliessbetttrockner und eine Rüttelsiebanlage. Nach dem Besprühen mit der Salzlösung werden die Holzspäne in den Fliessbetttrockner gefördert, wo sie mittels von unten nach oben durchgelassener erwärmter Trocknungsluft getrocknet werden. Die Trocknungsluft wird über Abluftkanäle durch einen Wärmetauscher und eine Entstaubungsanlage aus der Kompaktanlage gefördert. Die gesonderte Wärmegewinnung aus der Abluft ermöglicht die Energieeffizienz der Kompaktanlage zu verbessern, sie ist jedoch verhältnismäßig aufwändig. Nachdem die Holzspäne den Fliessbetttrockner durchlaufen haben, werden sie in die Rüttelsiebanlage gefördert. Darin werden sie in eine Grob- und eine Feinspanfraktion getrennt. Die zweistufige Verfahrensführung mit nacheinander geschalteter Trocknung und Siebung ermöglicht insbesondere die Gewinnung von zur Wärmeisolation geeigneten Holzspänen, allerdings ist sie verhältnismäßig zeitintensiv und platzaufwändig. Am Ende der Rüttelsiebanlage befinden sich Austragöffnungen, von denen die Holzspäne in Transportbehälter gefördert werden.

Aufgabe der nachfolgenden Erfindung ist es, ein kompaktes System vorzuschlagen, dass eine effiziente Aufbereitung von Holzspangut zu Holzspänen, die zur Wärmeisolation geeignet sind, ermöglicht.

### Darstellung der Erfindung

Die Aufgabe wird erfindungsgemäß durch eine Spanaufbereitungsanlage gelöst, wie sie im unabhängigen Anspruch 1 definiert ist sowie durch ein Verfahren, wie es im unabhängigen Anspruch 14 definiert ist. Vorteilhafte Ausführungsvarianten der Erfindung ergeben sich aus den abhängigen Ansprüchen.

Das Wesen der Erfindung besteht im Folgenden: Eine Spanaufbereitungsanlage zum Aufbereiten von Holzspangut zu Wärmeisolationsspänen umfasst eine Besprühungseinrichtung zum Besprühen des Holzspanguts mit einer Flüssigkeit, eine Trocknungseinrichtung zum Trocknen des besprühten Holzspanguts, wobei die Trocknungseinrichtung Warmluftbeaufschlagmittel zum Beaufschlagen des besprühten Holzspanguts mit erwärmter Luft aufweist, und eine Siebeinrichtung zum Abtrennen der Wärmeisolationsspäne aus dem besprühten Holzspangut. Insbesondere sind dabei die Trocknungseinrichtung und die Siebeinrichtung als eine Trocknungssiebeinheit ausgestaltet, wobei ein Sieb der Siebeinrichtung und die Warmluftbeaufschlagmittel der Trocknungseinrichtung so angeordnet sind, dass das Sieb entgegen seiner Siebdurchgangsrichtung von der erwärmten Luft durchströmbar ist.

Der Begriff Holzspangut bezieht sich in diesem Zusammenhang auf das Holzspangemisch, dass der Besprühungseinrichtung und der Trocknungssiebeinheit zugeführt wird. Das Holzspangut kann dem in einem Holzbearbeitungsbetrieb anfallenden Rohholzspangut entsprechen oder es kann vorbearbeitetes solches Rohholzspangut sein. Unter Wärmeisolationsspänen werden in diesem Zusammenhang insbesondere Holzspäne verstanden, die schwer entflammbar sind und die körperlich so dimensioniert sind, dass sie als Hohlraumisolation eine geeignet tiefe Wärmeleitfähigkeit aufweisen. Eine geeignet tiefe Wärmeleitfähigkeit (λ) kann beispielsweise in einem Bereich von 0.02 W/(m.K) bis 0.1 W/(m.K) oder von 0.03 W/(m·K) bis 0.06 W/(m·K) oder insbesondere von 0.035 W/(m·K) bis 0.05 W/(m·K) liegen. Damit die Wärmeisolationsspäne in einer Hohlraumisolation eine solche Wärmeleitfähigkeit ermöglichen, können sie beispielsweise eine Dichte von etwa 60 kg/m³ bis etwa 90 kg/m³ und/oder einen Durchmesser von mehr als etwa 4 mm beziehungsweise etwa 3.6 mm aufweisen. Die Wärmeisolationsspäne können in der Siebeinrichtung als Siebüberlaufgut des Siebs der Siebeinrichtung aus dem Holzspangut abgetrennt werden, wobei das restliche Holzspangut als Siebdurchgangsgut anfällt. Insbesondere kann das Siebüberlaufgut Hobelspäne als Wärmeisolationsspäne umfassen und das Siebdurchgangsgut Holzstaub und kubische Holzspäne beziehungsweise Sägespäne, die als Schallisolationsspäne verwendet werden können. Unter Siebdurchgangsrichtung wird eine Richtung in Bezug auf das Sieb verstanden, in die das Sieb von genügend kleinen beziehungsweise dichten Teilen durchgangen werden kann. Bei der häufig verwendeten Siebung mit Hilfe der Gravitationskräfte der Erde entspricht die Siebdurchgangsrichtung der Richtung, in die die Gravitationskräfte wirken also üblicherweise nach unten. Als Flüssigkeit, mit dem das Holzspangut in der Spanaufbereitungsanlage besprüht wird, kann insbesondere eine wässrige Lösung einer flammfestmachenden Mineralssalzmischung verwendet werden. Die Mineralsalzmischung kann beispielsweise Ammoniumsulfat und/oder ― phosphat umfassen und insbesondere zu einem überwiegenden Teil Monoammoniumphosphat. Die Temperatur der erwärmten Luft kann beispielsweise in einem Bereich von etwa 150°C bis 200°C liegen und kann insbesondere etwa 180°C betragen. Die Spanaufibereitungsanlage kann Fördermittel zum Fördern des Holzspanguts umfassen. Insbesondere können die Fördermittel in der Siebeinrichtung als Rüttelboden beziehungsweise als Rüttelsieb ausgestaltet sein.

Mittels der erfindungsgemäßen Trocknungssiebeinheit kann die Spanaufbereitungsanlage verhältnismäßig kompakt ausgestaltet sein, so dass sie beispielsweise auf einfache Weise mit zweckdienlicher Leistung in einem Frachtcontainer angeordnet sein kann. Solche Frachtcontainer werden typischerweise als gemäß der Norm 668 der internationalen Organisation für Normung (ISO) dimensionierte ISO-Container in verschiedenen Größen hergestellt. Beispielsweise können solche ISO-Container vom Typ "20 Fuß" sein und eine Länge von etwa 6,1 m, eine Breite von etwa 2,4 m, eine Höhe von etwa 2,6 m und ein Volumen von etwa 33 m³ aufweisen oder vom Typ "40 Fuß" mit einer Länge von etwa 12,2 m, einer Breite von etwa 2,4 m, einer Höhe von etwa 2,6 m und einem Volumen von etwa 67 m³. Weiter kann die erfindungsgemäße Trocknungssiebeinheit ermöglichen, dass die Siebung des Holzspanguts verbessert wird, indem die Wärmeisolationsspäne über ihre besseren Auftriebseigenschaften im Vergleich zum restlichen Holzspangut mittels der das Sieb entgegen seiner Siebdurchgangsrichtung durchströmenden Luft effizient vom Holzspangut abgetrennt werden kann. Gleichzeitig kann diese Luft auf bevorzugte Weise das Holzspangut und insbesondere die Wärmeisolationsspäne trocknen. Zudem kann die Siebung des Holzspanguts auch noch verbessert werden, da die das Sieb entgegen seiner Siebdurchgangsrichtung durchströmenden Luft ein Verstopfen des Siebs verhindern oder vermindern kann. Ebenfalls ermöglicht die erfindungsgemäße Trocknungssiebeinheit die Trocknung der Wärmeisolationsspäne und deren Abtrennung aus dem Holzspangut in einem Prozessschritt, was die Effizienz und Prozessgeschwindigkeit der Spanaufbereitungsanlage erhöhen kann. Zusammengefasst ermöglicht die erfindungsgemäße Ausgestaltung der Spanaufbereitungsanlage mit der Trocknungssiebeinheit unter anderem, dass die Wärmeisolationsspäne verhältnismäßig effizient, schnell und effektiv vom Holzspangut abgetrennt und getrocknet werden können.

Bevorzugt weisen die Warmluftbeaufschlagmittel der Trocknungseinrichtung der Trocknungssiebeinheit mindestens ein Luftzufuhrrohr auf, dessen Austrittsöffnung in Siebdurchgangsrichtung benachbart zum Sieb der Siebeinrichtung angeordnet ist. Die Austrittsöffnung kann dabei insbesondere unterhalb des Siebs angeordnet sein. Dabei können die Warmluftbeaufschlagmittel der Trocknungseinrichtung auch mehrere wie beispielsweise drei Luftzufuhrrohre aufweisen. Eine solche Ausgestaltung der Warmluftbeaufschlagmittel mit mindesten einem Luftzufuhrrohr ermöglicht, das Sieb auf einfache Weise mit warmer Luft zu beaufschlagen. Dabei ist vorzugsweise eine Abdeckung zwischen dem Sieb und der Austrittsöffnung des mindestens einen Luftzufuhrrohrs der Warmluftbeaufschlagmittel der Trocknungseinrichtung beabstandet vom Sieb und der Austrittsöffnung angeordnet. Eine solche Abdeckung, die beispielsweise ein Abdeckblech sein kann, kann verhindern, dass das Siebdurchgangsgut in das Luftzufuhrrohr hineingelangen kann und dabei die Warmluftzufuhr beeinträchtigt.

Bevorzugt weist die Trocknungseinrichtung der Trocknungssiebeinheit mindestens ein Luftabfuhrrohr auf. In Kombination mit dem Luftzufuhrrohr der Warmluftbeaufschlagmittel der Trocknungseinrichtung kann auf diese Weise ermöglicht werden, dass laufend erwärmte Luft durch das Holzspangut zirkuliert und die Wärmeisolationsspäne effizient trocknet. Insbesondere kann die Trocknungseinrichtung auch mehrere wie beispielsweise drei Luftabfuhrrohre aufweisen.

Vorzugsweise weist die Trocknungseinrichtung der Trocknungssiebeinheit mehrere Luftzufuhrrohre und mehrere Luftabfuhrrohre auf, wobei jeweils eines der Luftzufuhrrohre einem der Luftabfuhrrohre zugeordnet ist. Beispielsweise können die Luftzufuhrrohre entlang dem Sieb und unterhalb des Siebs angeordnet sein und die Luftabfuhrrohre dazu korrespondierend oberhalb des Siebs. Auf diese Weise können mehrere Trocknungszonen in der Trocknungssiebeinheit ausgestaltet sein, die ein besonders effizientes Trocknen des Spanguts beziehungsweise der Wärmeisolationsspäne ermöglichen.

Vorzugsweise umfassen die Warmluftbeaufschlagmittel der Trocknungseinrichtung der Trocknungssiebeinheit ein Heizelement zum Erwärmen von Luft und ein Gebläse zum Einblasen der erwärmten Luft durch das Sieb entgegen seiner Siebdurchgangsrichtung hindurch. Das Heizelement kann vorzugsweise eine oder mehrere Gasheizungen beziehungsweise Gasbrenner aufweisen. Mit einem solchen Heizelement kann die das Sieb durchströmenden Luft auf einfache Weise auf eine bevorzugte Temperatur wie beispielsweise etwa 180°C erwärmt werden.

Bevorzugt weist die Spanaufbereitungsanlage eine Mühle zum Anpassen der Spangrößenzusammensetzung im Holzspangut auf, wobei die Mühle der Besprühungseinrichtung vorgeschaltet ist. Unter vorgeschaltet beziehungsweise nachgeschaltet wird in diesem Zusammenhang die Reihenfolge in Bezug auf die Prozesslaufrichtung verstanden. Die Mühle ist also in dem Sinne der Besprühungseinrichtung vorgeschaltet, dass das Prozessgut also das Holzspanbeziehungsweise Rohholzspangut zuerst die Mühle durchläuft und danach zur Besprühungseinrichtung gelangt. Die Mühle kann beispielsweise eine Multischneidvorrichtung mit einer rotierenden Klinge zum kontinuierlichen Erzeugen von Schnitt mit oder ohne Sieb sein, wie sie beispielsweise von der Kongskilde Industries A/S unter der Typenbezeichnung MC 3000 vertrieben wird. Mittels einer solchen Mühle können im Rohholzspangut Holzspäne erzeugt werden, die wie oben angegeben dimensioniert sind, so dass sie als bevorzugte Wärmeisolationsspäne verwendbar sind.

Damit kann der Anteil an zur Wärmeisolation geeigneten Holzspänen im Holzspangut und somit die Ertragseffizienz der Spanaufbereitungsanlage an Wärmeisolationsspäne erhöht werden. Dabei sind vorzugsweise Abscheidemittel zum Abscheiden von Holzstaub aus dem Holzspangut zwischen der Mühle und der Besprühungseinrichtung angeordnet. Der so abgeschiedene Holzstaub kann in einem Behälter aufgefangen werden und beispielsweise zu Pellets verarbeitet als Brennstoff verwertet werden. Die Abscheidemittel weisen bevorzugt einen Fliehkraftabscheider und ein Filter auf, wobei der Fliehkraftabscheider und das Filter so angeordnet sind, dass mit dem Fliehkraftabscheider holzstaubhaltige Abluft aus dem Holzspangut abscheidbar ist, die dem Filter zuführbar ist, so dass mit dem Filter Holzstaub aus der Abluft filtrierbar ist. Solche Fliehkraftabscheider werden beispielsweise auch als Zyklone oder Zyklonabscheider oder Wirbler bezeichnet. Wie oben beschrieben kann der Holzstaub verwertet werden und die Abluft kann an die Umgebung abgegeben werden.

Vorzugsweise umfasst die Spanaufbereitungsanlage der Siebeinrichtung der Trocknungssiebeinheit nachgeschaltete Abscheidemittel zum Abscheiden von Holzstaub aus in der Siebeinrichtung anfallendem Siebdurchgangsgut des Holzspanguts. Auf diese Weise kann Holzstaub aus dem Siebdurchgangsgut entfernt werden, so dass insbesondere verhältnismäßig grobe Holzspäne des Holzspanguts übrig bleiben. Diese verhältnismäßig groben Holzspäne beziehungsweise Sägespäne können als Schallisolationsspäne zur Schalldämmung verwendet werden, wozu sie vorzugsweise analog zur oben beschriebenen Wärmeisolation mittels der Wärmeisolationsspäne in einen Hohlraum in einem Bauteil eingebracht werden. Damit die Schallisolationsspäne in einer Hohlraumisolation eine bevorzugte Schallisolation ermöglichen, können sie beispielsweise eine Dichte von etwa 200 kg/m³ und/oder einen Durchmesser von etwa 4 mm oder weniger beziehungsweise von etwa 3.6 mm oder weniger aufweisen. Dabei weisen die nachgeschalteten Abscheidemittel vorzugsweise einen Fliehkraftabscheider und ein Filter auf, wobei der Fliehkraftabscheider und das Filter so angeordnet sind, dass mit dem Fliehkraftabscheider holzstaubhaltige Abluft aus dem Siebdurchgangsgut abscheidbar ist, die dem Filter zuführbar ist, so dass mit dem Filter Holzstaub aus der Abluft filtrierbar ist. Der dabei anfallende bereits von der Besprühungseinrichtung besprühte Holzstaub kann wiederum in einem Behälter gesammelt und beispielsweise zu Fugendichtmasse verarbeitet werden. Die Abluft kann an die Umgebung abgegeben werden. Das mittels des Zyklons von holzstaubhaltiger Abluft gereinigte Siebdurchgangsgut beziehungsweise die Schallisolationsspäne kann/können ebenfalls in einem Behälter gesammelt werden.

Vorzugsweise umfasst die Spanaufbereitungsanlage der Trocknungssiebeinheit nachgeschaltete Luftstromfördermittel zum Fördern der Wärmeisolationsspäne in einen Wärmeisolationsspanbehälter, die mit der Trocknungssiebeinheit verbunden sind, so dass Abluft der Warmluftbeaufschlagmittel der Trocknungseinrichtung der Trocknungssiebeinheit zumindest teilweise zum Fördern der Wärmeisolationsspäne verwendbar ist. Mit einer solchen Anordnung der Luftströmfördermittel kann einerseits die Abluft der Warmluftbeaufschlagmittel weiterverwertet werden und andererseits kann die der Luftstrom auf beispielsweise etwa 70°C erwärmt werden, so dass die Wärmeisolationsspäne nachgetrocknet werden können, während sie in den Wärmeisolationsspanbehälter gefördert werden. Dies ermöglicht eine weitere Erhöhung der Effizienz der Spanaufbereitungsanlage. Dabei umfassen die Luftstromfördermittel vorzugsweise einen Austragventilator. Weiter können sie auch Förderrohre umfassen, die so gelegt sein können, dass der mittels des Austragventilators erzeugte Luftstrom die Wärmeisolationsspäne effizient in den Wärmeisolationsspanbehälter fördern kann.

Ein weiterer Aspekt der Erfindung betrifft ein Verfahren zum Aufbereiten von Holzspangut zu Wärmeisolationsspänen unter Verwendung einer oben beschriebenen Spanaufbereitungsanlage. In dem Verfahren wird das Holzspangut mittels der Besprühungseinrichtung der Spanaufbereitungsanlage besprüht. Mittels der Siebeinrichtung der Trocknungssiebeinheit werden dann die Wärmeisolationsspäne aus dem besprühten Holzspangut abgetrennt und gleichzeitig mittels der erwärmten Luft der Warmluftbeaufschlagmittel der Trocknungseinrichtung der Trocknungssiebeinheit getrocknet. Ein solches Verfahren ermöglicht einen effizienten Betrieb der Spanaufbereitungsanlage und effiziente Aufbereitung von Holzspangut zu Wärmeisolationsspänen.

### Kurze Beschreibung der Zeichnungen

Im Folgenden werden die erfindungsgemäße Spanaufbereitungsanlage und das erfindungsgemäße Verfahren unter Bezugnahme auf die beigefügten Zeichnungen anhand von Ausführungsbeispielen detaillierter beschrieben. Es zeigen:
- Fig. 1: eine schematische Seitenansicht eines Teils eines ersten Ausführungsbeispiels einer erfindungsgemäßen Spanaufbereitungsanlage;
- Fig. 2: eine schematische Seitenansicht eines anderen Teils der Spanaufbereitungsanlage von Fig. 1;
- Fig. 3: eine schematische Frontalansicht einer Trocknungssiebeinheit eines zweiten Ausführungsbeispiels einer erfindungsgemäßen Spanaufbereitungsanlage;
- Fig. 4: eine schematische seitliche Querschnittansicht der Trocknungssiebeinheit von Fig. 3;
- Fig. 5: eine schematische Aufsicht auf einen Deckel der Trocknungssiebeinheit von Fig. 3;
- Fig. 6: eine schematische Aufsicht auf die Trocknungssiebeinheit von Fig. 3 ohne Deckel;
- Fig. 7: eine schematische Aufsicht des Deckels von Fig. 5 und ein damit verbundenes Abluft- und Austragrohrsystem.

### Weg(e) zur Ausführung der Erfindung

Bestimmte Ausdrücke werden in der folgenden Beschreibung aus praktischen Gründen verwendet und sind nicht einschränkend zu verstehen. Die Wörter "rechts", "links", "unten" und "oben" bezeichnen Richtungen in der Zeichnung, auf die Bezug genommen wird. Die Ausdrücke "nach innen" und "nach aussen" bezeichnen Richtungen hin zum oder weg vom geometrischen Mittelpunkt der Spanaufbereitungsanlage sowie benannter Teile derselben. Die Terminologie umfasst die oben ausdrücklich erwähnten Wörter, Ableitungen von denselben und Wörter ähnlicher Bedeutung.

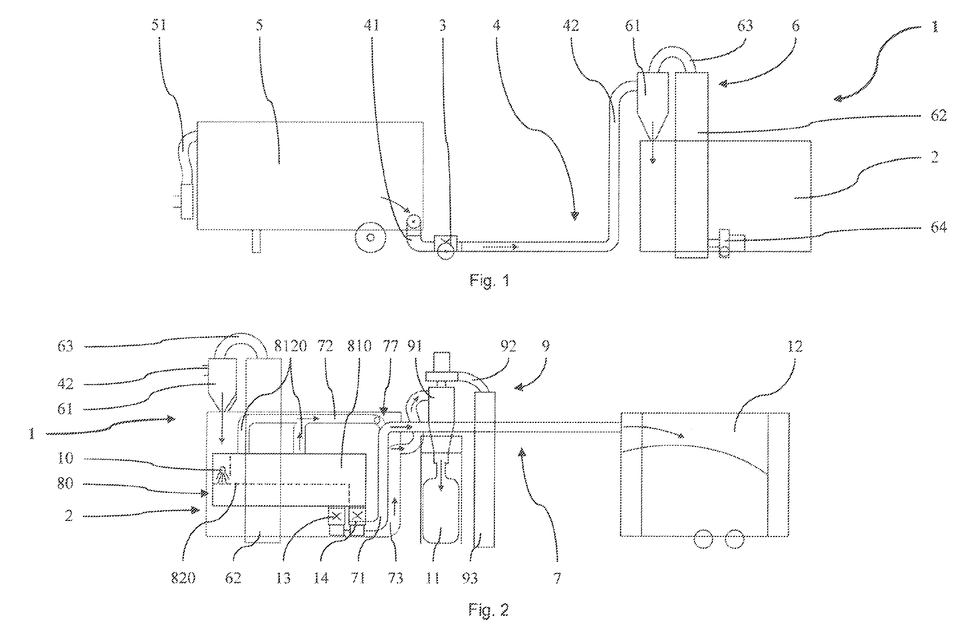

In der Fig. 1 ist ein Teil eines ersten Ausführungsbeispiels einer erfindungsgemäßen Spanaufbereitungsanlage 1 gezeigt. Die Spanaufbereitungsanlage umfasst eine mobile Mühle 3, die über ein Anschlussrohr 41 eines Zulaufrohrsystems 4 mit einem Rohholzspanguttransporter 5 verbunden ist. Der Rohholzspanguttransporter 5 weist einen Befüllungsanschluss 51 und ist mit Rohholzspangut beladen. Die Mühle 3 ist über ein Verbindungsrohr 42 des Zulaufrohrsystems 4 mit einem Zyklon 61 als Fliehkraftabscheider eines Entstaubungssystems 6 als Abscheidemittel verbunden. Der Zyklon 61 weist einen mit dem Verbindungsrohr 42 verbundenen Eingang sowie einen oberen und einen unteren Ausgang auf. Der untere Ausgang des Zyklons 61 mündet in einen Container 2, in dem insbesondere wärmerelevante Teile der Spanaufbereitungsanlage 1 angebracht sind. Der Container 2 kann insbesondere ein Frachtcontainer der oben beschriebenen Art sein. Der obere Ausgang des Zyklons 61 ist über einen Rohrbogen 63 mit einem Filter 62 des Entstaubungssystems 6 verbunden. Das Entstaubungssystems 6 weist weiter eine Absaugeinrichtung 64 auf, die wirkungsmäßig mit dem Filter 62 verbunden ist, und einen Staubbehälter beispielsweise in Form eines Fasses zum Aufnehmen von abgefiltertem Holzstaub (in Fig. 1 nicht gezeigt).

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, so wird auf deren Erläuterung in vorangehenden Figurenbeschreibungen Bezug genommen. Sind außerdem im unmittelbar zu einer Figur gehörigen Beschreibungstext Bezugszeichen erwähnt, die in der zugehörigen Figur nicht enthalten sind, so wird auf die vorangehenden Figuren verwiesen.

Fig. 2 zeigt einen weiteren Teil der Spanaufbreitungsanlage 1. Im Innern des Containers 2 ist eine Trocknungssiebeinheit 80 mit einem Eingangsbereich, einer Trocknungseinrichtung 810 und einer Siebeinrichtung 820 angeordnet. Am Eingangsbereich der Trocknungssiebeinheit 80 sind Sprühdüsen einer Besprühungseinrichtung 10 montiert. Die Besprühungseinrichtung 10 umfasst weiter einen Sprühmitteltank, eine Sprühpumpe und Verbindungsleitungen zwischen dem Sprühmitteltank und den Sprühdüsen (in Fig. 2 nicht ersichtlich). Die Trocknungseinrichtung 810 der Trocknungssiebeinheit 80 weist Warmluftbeaufschlagmittel mit einem Gasbrenner als Heizmittel und mindestens einem Luftzufuhrrohr (in Fig. 2 nicht gezeigt), das unterhalb der Siebeinrichtung 820 mündet, sowie drei Luftabfuhrrohre 8120 auf. Die Siebeinrichtung 820 umfasst einen Gitterrost als Sieb, der mit einem Rüttelmotor verbunden ist (in Fig. 2 nicht gezeigt). An seinem in Prozesslaufrichtung beziehungsweise rechten Ende weist die Trocknungssiebeinheit 80 einen nach unterhalb des Gitterrosts der Siebeinrichtung 820 geöffneten Siebdurchgangsschacht 13 und einen nach oberhalb des Gitterrosts der Siebeinrichtung 820 geöffneten Siebüberlaufschacht 14 auf.

Der Siebüberlaufschacht 14 ist über ein Siebüberlaufrohr 71 eines Abluft- und Austragrohrsystems 7 mit einem außerhalb des Containers 2 angeordneten mobilen Wärmeisolationsspanbehälter 12 verbunden. Die Luftabfuhrrohre 8120 der Trocknungseinrichtung 810 münden in ein Abluftsammelrohr 72 des Abluft- und Austragrohrsystems 7. Das Abluft- und Austragrohrsystem 7 umfasst weiter eine Koppelungseinrichtung 77, die das Abluftsammelrohr 72 so mit dem Siebüberlaufrohr verbindet, dass die aus dem Abluftsammelrohr 72 austretende warme Abluft zum Fördern im Siebüberlaufrohr 71 verwendet werden kann. Der Siebdurchgangsschacht 13 ist über ein Siebdurchgangsrohr 73 des Abluft- und Austragrohrsystems 7 mit einem Zyklon 91 als Fliehkraftabscheider eines weiteren Entstaubungssystems 9 als nachgeschaltete Abscheidemittel verbunden. Der Zyklon 91 weist einen mit dem Siebdurchgangsrohr 73 verbundenen Eingang sowie einen oberen und einen unteren Ausgang auf. Der untere Ausgang des Zyklons 91 mündet in einen Bigbag 11 als Auffangbehälter, der in einem passenden Gestell aufgehängt ist. Solche Bigbags oder FIBC (Flexible Intermediate Bulk Containers) sind standardisierte Transportbehältnisse für stückige Güter oder Schüttgüter und fassen etwa 1'000 bis 1'300 Liter. Der obere Ausgang des Zyklons 91 ist über einen Rohrbogen 92 mit einem Filter 93 des Entstaubungssystems 9 verbunden. Das Entstaubungssystems 9 weist weiter eine Absaugeinrichtung auf, die wirkungsmäßig mit dem Filter 93 verbunden ist, und einen Staubbehälter beispielsweise in Form eines Fasses zum Aufnehmen von abgefiltertem Holzstaub (in Fig. 2 nicht gezeigt).

Im Betrieb der Spanaufbereitungsanlage 1 wird das Rohholzspangut im Rohholzspanguttransporter 5 angeliefert, der über das Verbindungsrohr 42 mit der Mühle 3 und somit mit der Spanaufbereitungsanlage 1 verbunden wird. Das Rohholzspangut wird durch das Verbindungsrohr 42 zur Mühle 3 gefördert und dort gemahlen beziehungsweise geschnitten. Dieses Mahlen beziehungsweise Schneiden des Rohholzspanguts dient dazu, den Anteil an Holzspänen mit für die Wärmeisolation besonders geeigneten Dimensionen zu erhöhen. Das die Mühle 3 verlassende Holzspangut wird über das Verbindungsrohr 42 dem Entstaubungssystem 6 zugeführt. Im Zyklon 61 des Entstaubungssystems 6 wird holzstaubhaltige Luft aus dem Holzspangut abgeschieden und dem Filter 62 zugeführt. Im Filter wird dann der Holzstaub aus der holzstaubhaltige Luft abgeschieden und in den Staubbehälter gefördert. Der im Staubbehälter gesammelte Holzstaub kann dann beispielsweise zu Pellets weiterverarbeitet und als Brennstoff verwertet werden oder als Füllstoff für Kunststoffzusammensetzungen beispielsweise in Fugendichtungsmassen oder Spachtelmassen.

Durch den unteren Ausgang des Zyklons 61 wird das Holzspangut in die Trocknungssiebeinheit 80 im Innern des Containers 2 gefördert. Am Eingangsbereich der Trocknungssiebeinrichtung 80 wird das Holzspangut mittels der Besprühungseinrichtung 10 mit einer flammfestmachenden wässrigen Lösung mit einer Mineralssalzmischung besprüht, wobei die Mineralsalzmischung vorzugsweise zu einem überwiegenden Teil aus Monoammoniumphosphat besteht. Im Anschluss daran wird das Holzspangut mittels durch den Rüttelmotor induzierten Rüttelbewegungen des Gitterrosts der Siebeinrichtung 820 auf und entlang dem Gitterrost gefördert. Dabei wird das Holzspangut durch den Gitterrost gesiebt. Gleichzeitig wird der Gitterrost von unten her über das mindestens eine Luftzufuhrrohr der Warmluftbeaufschlagmittel der Trocknungseinrichtung 810 mit Luft von etwa 180°C beaufschlagt und von unten nach oben durchdrungen. Dabei wird einerseits das Holzspangut getrocknet und andererseits werden Holzspäne mit verhältnismäßig großem Auftrieb oben gehalten. Damit kann eine effiziente Trocknung und Abtrennung von Hobelspänen beziehungsweise Wärmeisolationsspänen aus dem Holzspangut bewirkt werden.

Die erwärmte Luft wird nach dem Trocknen des Holzspanguts über die Luftabfuhrrohre 8120 der Trocknungseinrichtung 810 abgeführt. Nachdem die Wärmeisolationsspäne den Gitterrost der Siebeinrichtung 820 überlaufen haben, werden sie im Siebüberlaufschacht 14 aufgenommen und durch das Siebüberlaufrohr 71 in den Wärmeisolationsspanbehälter 12 gefördert. Zu diesem Fördern dient ein Austragventilator als Luftstromfördermittel, der einerseits Luft aus der Umgebung des Containers 2 ansaugt und andererseits über die Koppelungseinrichtung 77 die erwärmte Luft aus dem Abluftsammelrohr 72. Der Luftförderstrom im Siebüberlaufrohr 71 wird auf diese Weise auf etwa 70°C erwärmt, wodurch die Wärmeisolationsspäne nachgetrocknet werden. Die im Wärmeisolationsspanbehälter 12 geförderten Wärmeisolationsspäne werden nach Abschluss des Spanaufbereitungsprozesses an den Anwendungsort verfrachtet und dort beispielsweise zu Isolation in Hohlräume von Bauteilen eingeblasen.

Das den Gitterrost der Siebeinrichtung 820 durchdringende Holzspangut beziehungsweise das Siebdurchgangsgut wird im Siebdurchgangsschacht 13 aufgenommen und von dort über das Siebdurchgangsrohr 73 dem nachgeschalteten Entstaubungssystems 9 zugeführt. Im Zyklon 91 des weiteren Entstaubungssystems 9 wird holzstaubhaltige Luft aus dem Siebdurchgangsgut abgeschieden und dem Filter 93 zugeführt. Im Filter 93 wird dann der Holzstaub aus der holzstaubhaltigen Luft abgeschieden und in den weiteren Staubbehälter gefördert. Der im weiteren Staubbehälter gesammelte Holzstaub, der bereits mit der flammfestmachenden Lösung besprüht ist, kann dann beispielsweise zu Fugendichtmasse weiterverarbeitet werden. Durch den unteren Ausgang des Zyklons 91 wird das entstaubte Siebdurchgangsgut in den Bigbag gefördert und darin verpackt. Dieses entstaubte Siebdurchgangsgut umfasst vor allem verhältnismäßig grobe Holzspäne beziehungsweise Sägespäne, die als Schallisolationsholzspäne zur Schalldämmung verwendet werden.

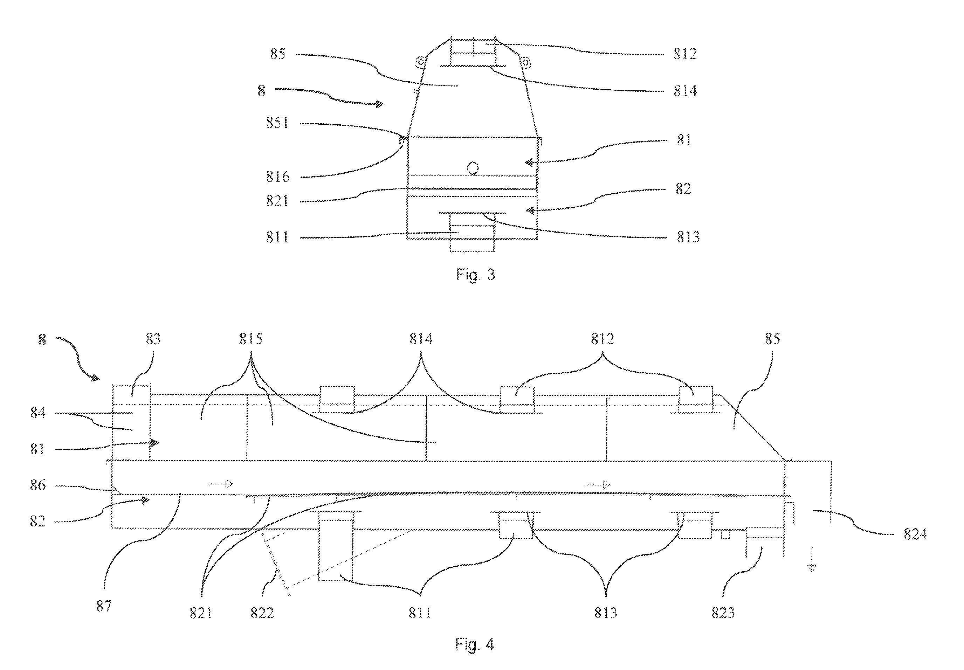

In der Fig. 3 und in der Fig. 4 ist eine Trocknungssiebeinheit 8 mit einer Trocknungseinrichtung 81 und einer Siebeinrichtung 82 eines zweiten Ausführungsbeispiels einer erfindungsgemäßen Spanaufbereitungsanlage gezeigt. Dabei kann die Trocknungssiebeinheit 8 beispielsweise etwa 4 m lang und etwa 60 cm breit sein. Die in der Fig. 3 und in der Fig. 4 nicht gezeigten Teile der Spanaufbereitungsanlage können insbesondere entsprechend der in den Fig. 1 und Fig. 2 gezeigten Ausführungsform der Spanaufbereitungsanlage 1 ausgestaltet sein. Die Trocknungssiebeinheit 8 umfasst einen Deckel 54, der geöffnet werden kann, um auf einen Innenraum zugreifen zu können. Im Bereich eines seiner beiden Längesenden (das linke Längsende in Fig. 4) weist die Trocknungssiebeinheit einen Eingangsschacht 83 mit einem rechteckigen Querschnitt auf, durch den die Trocknungssiebeinheit 8 mit Holzspangut befüllt werden kann. An den beiden Breitseiten des Eingangsschachts 83 sind auf unterschiedlichen Höhen jeweils zwei Düsenöffnungen 84 angebracht, durch die im Betrieb eine Flüssigkeit auf das Holzspangut gesprüht werden kann. Unterhalb des Eingangsschachts 83 ist ein Umlenkblech 86 in einem 45°-Winkel angeordnet, über welches das vertikal in die Trocknungssiebeinheit 8 einfallende Holzspangut in eine horizontale Richtung umgelenkt werden kann. Anschließend an das Umlenkblech 86 ist ein horizontaler Boden im Innenraum der Trocknungssiebeinrichtung 8 angeordnet, der in Längsrichtung beziehungsweise Prozesslaufrichtung (also in Fig. 4 wie mit den Pfeilen angedeutet von links nach rechts) einen Blechabschnitt 87 und vier nacheinander angeordneten Siebabschnitte 821 als Sieb der Siebeinrichtung 82 umfasst. Der Boden ist federnd gelagert und über einen Rüttelmotoranschluss 822 mit einem Rüttelmotor verbindbar.

Unterhalb der Siebabschnitte 821 sind drei Luftzufuhrrohre 811 von Warmluftbeaufschlagmitteln der Trocknungseinrichtung 81 in Prozesslaufrichtung nacheinander angeordnet, dessen Austrittsöffnungen in einer Siebdurchgangsrichtung der Siebabschnitte 821 benachbart zu den Siebabschnitten 821 angeordnet sind. Die Austrittsöffnungen der Luftzufuhrrohre 811 sind jeweils von einem Abdeckblech 813 als Abdeckung in Richtung der Siebabschnitte 821 abgedeckt, wobei die Abdeckbleche 813 jeweils so beabstandet an den Luftzufuhrrohren 811 befestigt sind, dass erwärmte Luft zwischen der Austrittsöffnung und dem zugehörigen Abdeckblech 813 austreten kann. Korrespondierend zu den Luftzufuhrrohren 811 sind drei Luftabfuhrrohre 812 der Trocknungseinrichtung 81 am Deckel 85 angeordnet, die jeweils analog zu den Luftzufuhrrohren 811 mit einem Abdeckblech 814 versehen sind.

Über die Anordnung insbesondere der Luftzufuhrrohre 811 und der Luftabfuhrrohre 812 sind im Innenraum der Trocknungssiebeinheit 8 vier Zonen 815 der Trocknungseinrichtung 81 ausgebildet. Am in Prozesslaufrichtung dem Eingangsschacht 83 entgegengesetzten Ende weist die Trocknungssiebeinheit 8 einen Siebdurchgangsgutschacht 823 und einen Siebüberlaufgutschacht 824 auf. Der Deckel 85 weist ein Auflagebord 851 auf, das bei geschlossenem Deckel 85 auf einem korrespondierenden Bord 816 der Trocknungseinrichtung 81 aufliegt und darauf gestützt ist.

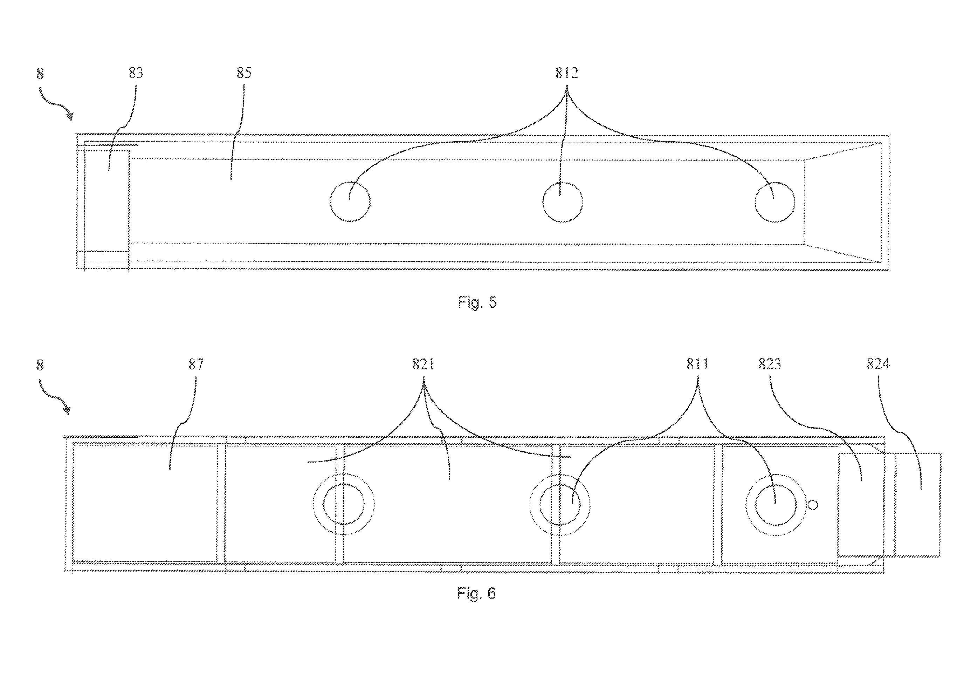

In der Fig. 5 ist die Trocknungssiebeinheit 8 von oben gezeigt, wobei der Eingangsschacht 83 und die am Deckel 85 angeordneten drei Luftabfuhrrohre 812 ersichtlich sind. Der Eingangsschacht 83 kann dabei beispielsweise einen rechteckigen Querschnitt von etwa 50 cm Länge und etwa 22 cm Breite aufweisen und die Luftabfuhrrohre 812 einen Durchmesser von etwa 21 cm. Fig. 6 zeigt die Trocknungssiebeinheit 8 ebenfalls von oben jedoch ohne den Deckel 85. Darin ist schematisch der Boden mit dem Blechabschnitt 87 sowie mit den vier Siebabschnitten 821 der Siebeinrichtung 82 ersichtlich sowie die drei Luftzufuhrrohre 811 der Trocknungseinrichtung 81, der Siebdurchgangsgutschacht 823 und der Siebüberlaufgutschacht 824. Der Siebdurchgangsgutschacht 823 und der Siebüberlaufgutschacht 824 können dabei jeweils beispielsweise einen rechteckigen Querschnitt von etwa 50 cm Länge und etwa 22 cm Breite aufweisen und die Luftzufuhrrohre 811 einen Durchmesser von etwa 21 cm sowie die zugehörigen Abdeckbleche einen Durchmesser von etwa 30 cm.

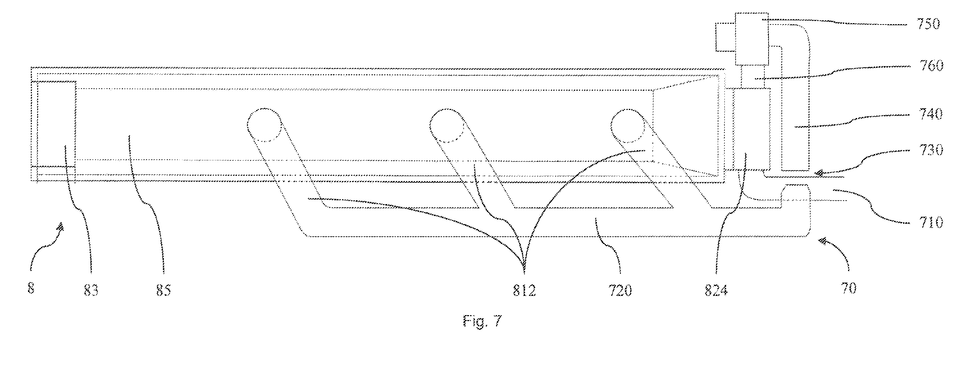

In der Fig. 7 ist die Trocknungssiebeinheit 8 analog zu Fig. 5 von oben mit einen Abluft- und Austragrohrsystem 70 gezeigt. Das Abluft- und Austragrohrsystem 70 umfasst ein Abluftsammelrohr 720, in das die Luftabfuhrrohre 812 der Trocknungseinrichtung 81 münden, und ein mit dem Siebüberlaufgutschacht 824 verbundenes Siebüberlaufrohr 710. Weiter umfasst das Abluft- und Austragrohrsystem 70 eine Koppelungseinrichtung, die ein Ansaugrohr 740, einen Austragventilator 750 und ein Ausblasrohr 760 aufweist. Das Ansaugrohr 740 ist mit einem Eingang des Austragventilators 750 verbunden und ein Ausgang des Austragventilators 750 über das Ausblasrohr 760 mit dem Siebüberlaufgutschacht 82. Zwischen dem verjüngt ausgestalteten offenen Ende des Siebüberlaufrohrs und dem angrenzenden offenen Ende des Ansaugrohrs 740 ist eine Beabstandung 730 angeordnet.

Im Betrieb der Spanaufbereitungsanlage wird Holzspangut durch den Eingangsschacht 83 von oben in die Trocknungssiebeinheit 8 eingefüllt und dabei von einer Besprühungseinrichtung über die Düsenöffnungen 84 mit einer flammfestmachenden wässrigen Salzlösung besprüht. Wie durch die Pfeile in Fig. 4 angedeutet fällt das Hoizspangut über das Umlenkblech 86 auf den Blechabschnitt 87 und wird von dort mittels Rüttelbewegung des Bodens über die Siebabschnitte 821 in Prozesslaufrichtung gefördert. Der Blechabschnitt 87 ist luftundurchlässig ausgestaltet, damit vor dem eigentlichen Trocknen des Holzspanguts die Salzlösung in das Holzspangut einziehen kann. Die Siebabschnitte 821 werden von aus den Austrittsöffnungen der Luftzufuhrrohre 811 austretender auf etwa 180° erwärmter Luft durchblasen. Dadurch wird einerseits das Holzspangut getrocknet und andererseits werden Anteile mit verhältnismäßig guten Auftriebseigenschaften oberhalb des Bodens gehalten. Der Anteil des Holzspanguts, der die Siebabschnitte 821 nicht durchdringt also das Siebüberlaufgut wird als Wärmeisolationsspäne in den Siebüberlaufgutschacht 824 und von dort aus der Trocknungssiebeinheit 8 gefördert. Der Anteil des Holzspanguts, der die Siebabschnitte 821 nach unten durchdringt also das Siebdurchlaufgut wird in den Siebdurchlaufgutschacht 823 und von dort aus der Trocknungssiebeinheit 8 gefördert. Die erwärmte Luft wird nach Trocknung des Holzspanguts durch die Luftabzugrohre 812 aus der Trocknungssiebeinheit 8 in das Abluftsammelrohr 720 der Abluft- und Austragrohrsystem 70 gefördert. Über das offene Ende des Ansaugrohrs 740 saugt der Austragventilator 750 einerseits Luft aus der Umgebung an und andererseits die aus dem offenen Ende des Abluftsammelrohrs 720 austretende erwärmte Abluft. Diese gemischte und erwärmte Luft wird dann vom Austragventilator 750 durch das Ausblasrohr 760 durch den Siebüberlaufgutschacht 824 geblasen, wodurch das Siebüberlaufgut durch das Siebüberlaufrohr 710 gefördert und dabei nachgetrocknet wird. Durch die Anordnung der Beabstandung 730, die etwa 5 cm bis etwa 15 cm und insbesondere etwa 10 cm betragen kann, wird ermöglicht, dass einerseits sowohl die erwärmte Abluft als auch Luft aus der Umgebung vom Austragventilator 750 angesaugt werden kann und dass andererseits der im Abluftsammelrohr 720 vorherrschende Überdruck nicht direkt mit dem im Ansaugrohr 740 herrschenden Unterdruck gekoppelt ist.

Die Produktionsleistung der oben beschriebenen Spanaufbereitungsanlagen kann beispielsweise etwa 10 m³/h betragen, wobei davon etwa 9.5 m³/h Wärmeisolationsholzspäne und etwa 0.5 m³/h Schallisolationsspäne sein können. Die Warmluftbeaufschlagmittel können dabei mittels einem oder mehrerer Ventilatoren etwa 1'600 m³ auf etwa 180°C erwärmte Luft mit etwa 400 Pa über die Luftzufuhrrohre einbringen. Zum Fördern der Wärmeisolationsspäne in den Wärmeisolationsspanbehälter kann ein Luftstrom von etwa 2'500 m³/h bis etwa 3'000 m³/h mit etwa 2'000 Pa bis etwa 2'500 Pa von einem oder mehreren Austragventilatoren erzeugt werden, wobei der Luftstrom unter Beimischung von Trocknungsabluft eine Temperatur von etwa 70°C aufweisen kann.

Obwohl die Erfindung mittels der Figuren und der zugehörigen Beschreibung dargestellt und detailliert beschrieben ist, sind diese Darstellung und diese detaillierte Beschreibung illustrativ und beispielhaft zu verstehen und nicht als die Erfindung einschränkend. Es versteht sich, dass Fachleute Änderungen und Abwandlungen machen können. Insbesondere umfasst die Erfindung ebenfalls Ausführungsformen mit jeglicher Kombination von Merkmalen, die vorstehend oder nachfolgend zu verschiedenen Ausführungsformen genannt oder gezeigt sind.

Die Erfindung umfasst ebenfalls einzelne Merkmale in den Figuren auch wenn sie dort im Zusammenhang mit anderen Merkmalen gezeigt sind und/oder vorstehend oder nachfolgend nicht genannt sind. Auch können die in den Figuren und der Beschreibung beschriebenen Alternativen von Ausführungsformen und einzelne Alternativen deren Merkmale vom Erfindungsgegenstand ausgeschlossen sein.

Im Weiteren schließt der Ausdruck "umfassen" und Ableitungen davon andere Elemente oder Schritte nicht aus. Ebenfalls schließt der unbestimmte Artikel "ein" bzw. "eine" und Ableitungen davon eine Vielzahl nicht aus. Die Funktionen mehrerer in den Ansprüchen aufgeführter Merkmale können durch eine Einheit erfüllt sein. Die Begriffe "im Wesentlichen", "etwa", "ungefähr" und dergleichen in Verbindung mit einer Eigenschaft beziehungsweise einem Wert definieren insbesondere auch genau die Eigenschaft beziehungsweise genau den Wert. Alle Bezugszeichen in den Ansprüchen sind nicht als den Umfang der Ansprüche einschränkend zu verstehen.

## Patentansprüche

1. Spanaufbereitungsanlage (1) zum Aufbereiten von Holzspangut zu Wärmeisolationsspänen, umfassend
eine Besprühungseinrichtung (10) zum Besprühen des Holzspanguts mit einer Flüssigkeit;
eine Trocknungseinrichtung (81; 810) zum Trocknen des besprühten Holzspanguts, wobei die Trocknungseinrichtung (81; 810) Warmluftbeaufschlagmittel (811, 813) zum Beaufschlagen des besprühten Holzspanguts mit erwärmter Luft aufweist; und
eine Siebeinrichtung (82) zum Abtrennen der Wärmeisolationsspäne aus dem besprühten Holzspangut,
**dadurch gekennzeichnet, dass** die Trocknungseinrichtung (81; 810) und die Siebeinrichtung (82) als eine Trocknungssiebeinheit (8; 80) ausgestaltet sind, wobei ein Sieb (820; 821) der Siebeinrichtung (82) und die Warmluftbeaufschlagmittel (811, 813) der Trocknungseinrichtung (81; 810) so angeordnet sind, dass das Sieb (820; 821) entgegen seiner Siebdurchgangsrichtung von der erwärmten Luft durchströmbar ist.

2. Spanaufbereitungsanlage (1) nach Anspruch 1, bei der die Warmluftbeaufschlagmittel (811, 813) der Trocknungseinrichtung (81; 810) der Trocknungssiebeinheit (8; 80) mindestens ein Luftzufuhrrohr (811) aufweisen, dessen Austrittsöffnung in Siebdurchgangsrichtung benachbart zum Sieb (820; 821) der Siebeinrichtung (82) angeordnet ist.

3. Spanaufbereitungsanlage (1) nach Anspruch 2, bei der eine Abdeckung (813) zwischen dem Sieb (820; 821) und der Austrittsöffnung des mindestens einen Luftzufuhrrohrs (811) der Warmluftbeaufschlagmittel (811, 813) der Trocknungseinrichtung (81; 810) beabstandet vom Sieb (820; 821) und der Austrittsöffnung angeordnet ist.

4. Spanaufbereitungsanlage (1) nach einem der vorangehenden Ansprüche, bei dem die Trocknungseinrichtung (81; 810) der Trocknungssiebeinheit (8; 80) mindestens ein Luftabfuhrrohr (812) aufweist.

5. Spanaufbereitungsanlage (1) nach den Ansprüchen 2 oder 3 und 4, bei der die Trocknungseinrichtung (81; 810) der Trocknungssiebeinheit (8; 80) mehrere Luftzufuhrrohre (811) und mehrere Luftabfuhrrohre (812) aufweist, wobei jeweils eines der Luftzufuhrrohre (811) einem der Luftabfuhrrohre (812) zugeordnet ist.

6. Spanaufbereitungsanlage (1) nach einem der vorangehenden Ansprüche, wobei die Warmluftbeaufschlagmittel (811, 813) der Trocknungseinrichtung (81; 810) der Trocknungssiebeinheit (8; 80) ein Heizelement zum Erwärmen von Luft und ein Gebläse zum Einblasen der erwärmten Luft durch das Sieb (820; 821) entgegen seiner Siebdurchgangsrichtung hindurch umfassen.

7. Spanaufbereitungsanlage (1) nach einem der vorangehenden Ansprüche, die eine Mühle (3) zum Anpassen der Spangrößenzusammensetzung im Holzspangut aufweist, wobei die Mühle (3) der Besprühungseinrichtung (10) vorgeschaltet ist.

8. Spanaufbereitungsanlage (1) nach Anspruch 7, bei der Abscheidemittel (6) zum Abscheiden von Holzstaub aus dem Holzspangut zwischen der Mühle (3) und der Besprühungseinrichtung (10) angeordnet sind.

9. Spanaufbereitungsanlage (1) nach Anspruch 8, bei der die Abscheidemittel (6) einen Fliehkraftabscheider (61) und ein Filter (62) aufweisen, wobei der Fliehkraftabscheider (61) und das Filter (62) so angeordnet sind, dass mit dem Fliehkraftabscheider (61) holzstaubhaltige Abluft aus dem Holzspangut abscheidbar ist, die dem Filter (62) zuführbar ist, so dass mit dem Filter (62) Holzstaub aus der Abluft filtrierbar ist.

10. Spanaufbereitungsanlage (1) nach einem der vorangehenden Ansprüche, die der Siebeinrichtung (82) der Trocknungssiebeinheit (8; 80) nachgeschaltete Abscheidemittel (9) zum Abscheiden von Holzstaub aus in der Siebeinrichtung (82) anfallendem Siebdurchgangsgut des Holzspanguts umfasst.

11. Spanaufbereitungsanlage (1) nach Anspruch 10, bei der die nachgeschalteten Abscheidemittel (9) einen Füehkraftabscheider (91) und ein Filter (93) aufweisen, wobei der Fliehkraftabscheider (91) und das Filter (93) so angeordnet sind, dass mit dem Fliehkraftabscheider (91) holzstaubhaltige Abluft aus dem Siebdurchgangsgut abscheidbar ist, die dem Filter (93) zuführbar ist, so dass mit dem Filter (93) Holzstaub aus der Abluft filtrierbar ist.

12. Spanaufbereitungsanlage (1) nach einem der vorangehenden Ansprüche, die der Trocknungssiebeinheit (8; 80) nachgeschaltete Luftstromfördermittel (71) zum Fördern der Wärmeisolationsspäne in einen Wärmeisolationsspanbehälter umfasst, die mit der Trocknungssiebeinheit (8; 80) verbunden ist, so dass Abluft der Warmluftbeaufschlagmittel (811, 813) der Trocknungseinrichtung (81; 810) der Trocknungssiebeinheit (8; 80) zumindest teilweise zum Fördern der Wärmeisolationsspäne verwendbar ist.

13. Spanaufbereitungsanlage (1) nach Anspruch 12, bei der die Luftstromfördermittel (71) einen Austragventilator umfassen.

14. Verfahren zum Aufbereiten von Holzspangut zu Wärmeisolationsspänen unter Verwendung einer Spanaufbereitungsanlage (1) nach einem der vorangehenden Ansprüche, bei dem
das Holzspangut mittels der Besprühungseinrichtung (10) der Spanaufbereitungsanlage (1) besprüht wird, und
mittels der Siebeinrichtung (82) der Trocknungssiebeinheit (8; 80) die Wärmeisolationsspäne aus dem besprühten Holzspangut abgetrennt werden und gleichzeitig mittels der erwärmten Luft der Warmluftbeaufschlagmittel (811, 813) der Trocknungseinrichtung (81; 810) der Trocknungssiebeinheit (8; 80) getrocknet werden.
